# EUROPÄISCHE PATENTANMELDUNG

(11) **EP 2 047 819 A1**
(43) Veröffentlichungstag der Anmeldung: **15.04.2009**
(21) Anmeldenummer: 08165944.3
(22) Anmeldetag: 06.10.2008
(51) Int. Cl.: A61C 5/04, A61C 13/15

(54) **Modelliervorrichtung für einen strahlungshärtenden Wirkstoff**

(30) Priorität: 10.10.2007 DE 202007014172 U
(71) Anmelder: Wegold Edelmetalle AG, 90530 Wendelstein (DE)
(72) Erfinder: Klück, Stefan, 90530 Wendelstein (DE)
(74) Vertreter: Andres, Mark

(57) **Zusammenfassung**

Die Erfindung betrifft eine Modelliervorrichtung (10) für einen strahlungshärtenden Werkstoff, insbesondere für einen lichthärtenden Dentalwerkstoff, gekennzeichnet durch ein Modellierelement (15, 15', 15", 85, 85'), insbesondere einer Modellierspitze, zur Modellierung des Werkstoffs vor und/oder während einer Anhärtung und/oder Härtung und eine Strahlungsquelle (20) zur Bereitstellung von Strahlung für die Anhärtung und/oder Härtung des Werkstoffs. Erfindungsgemäß ist das Modellierelement (15, 15', 15", 85, 85') mit der Strahlungsquelle (20) gekoppelt und die Modelliervorrichtung (10) mit wenigstens einem Strahlungselement (15, 15', 15", 90, 95) zur Strahlungsführung und/oder Strahlungsfeldformung versehen.

## Beschreibung

Die vorliegende Erfindung betrifft eine Modelliervorrichtung für einen strahlungshärtenden Werkstoff, insbesondere für einen lichthärtenden Dentalwerkstoff.

Insbesondere im Dentalbereich werden strahlungshärtende Werkstoffe eingesetzt, beispielsweise bei der Modellierung eines Zahnersatzes oder Zahnteilersatzes. Auch werden zuweilen in Nagelstudios Applikationen an Nägeln oder künstliche Nägeln mit Hilfe von lichthärtenden Materialien hergestellt.

Einerseits werden zur Härtung von lichthärtenden Materialien Polymerisationsgeräte benutzt, die fest installiert sind und in der Regel eine Bestrahlungskammer zur Aufnahme des zu härtenden Werkstücks aufweisen. Andererseits werden sogenannte Gelierlampen in mobilerer Form verwendet, unter die das Werkstück gehalten wird, um dort mittels Lichthärtung fixiert zu werden. In Zahnartpraxen werden zudem geeignete Handgeräte im Mundbereich eingesetzt, wobei nach dem Applizieren der Dentalmassen und Gestalten der Füllungen die Polymerisationslampen aufgesetzt und das modellierte Dentalwerkstück als Zahnersatz oder Zahnteilersatz gehärtet wird. Im Bereich der Nagelstudios wird die Hand mit dem oder den modellierten Nägeln nach dem Modellieren unter eine geeignete Lampe zur Härtung gehalten.

Insbesondere in den Fällen, in denen das modellierte Werkstück aus dem noch ungehärteten Material zu einer Strahlungsquelle gebracht werden muss, von der die zur Härtung eingesetzte Strahlung eingebracht wird, kann es vorkommen, dass infolge der Bewegung eine Veränderung an der Modellierung auftritt.

Auch wenn die Strahlungsquelle zu dem modellierten Werkstück gebracht wird, wie dies beispielsweise beim Lichthärten von Zahnfüllungen im Mundbereich erfolgt, kann es vorkommen, dass infolge oder während des Heranführens der Strahlungsquelle eine Veränderung an der Modellierung auftritt.

Aufgabe der vorliegenden Erfindung ist es, eine Modelliervorrichtung für einen strahlungshärtenden Werkstoff, insbesondere für einen lichthärtenden Dentalwerkstoff bereitzustellen, bei dem die Gefahr von ungewollten Veränderungen während oder infolge des Zusammenbringens von modelliertem Werkstück und Strahlungsquelle im Vergleich zu den bekannten Vorrichtungen reduziert wird.

Erfindungsgemäß wird die Aufgabe durch eine Modelliervorrichtung für einen strahlungshärtenden Werkstoff, insbesondere für einen lichthärtenden Dentalwerkstoff gelöst, mit einem Modellierelement, insbesondere einer Modellierspitze, zur Modellierung des Werkstoffs vor und/oder während einer Anhärtung und/oder Härtung und einer Strahlungsquelle zur Bereitstellung von Strahlung für die Anhärtung und/oder Härtung des Werkstoffs, wobei das Modellierelement mit der Strahlungsquelle gekoppelt ist und die Modelliervorrichtung mit wenigstens einem Strahlungselement zur Strahlungsführung und/oder Strahlungsfeldformung versehen ist.

Die Erfindung basiert auf der Einsicht, dass eine unerwünschte Veränderung an dem modellierten Werkstück weitgehend verhindert werden kann, wenn mit dem gleichen Instrument ohne ein Absetzen oder Austauschen sowohl eine Modellierung als auch eine Härtung bzw. Anhärtung durchgeführt werden kann. Mit der erfindungsgemäßen Modelliervorrichtung kann modelliert und - sofern gewünscht - gleichzeitig die beispielsweise zur Polymerisation des strahlungshärtenden Werkstoffs notwendige Lichtmenge zugeführt werden, ohne den Arbeitsablauf unterbrechen zu müssen. Das modellierte Werkstoff kann sofort nachdem die Modellierung abgeschlossen ist oder während der Modellierung fixiert werden, ohne die Modelliervorrichtung abzusetzen. Die erfindungsgemäße Modelliervorrichtung vereinigt somit zwei Werkzeuge in sich: ein Modellierinstrument zum Modellieren des Werkstoffs und ein Lichthärtinstrument zum An- oder Aushärten des bearbeiteten Werkstoffs.

In einer bevorzugten Ausführungsform der Erfindung ist das Modellierelement lösbar mit der Strahlungsquelle verbunden. Auf diese Weise besteht eine Flexibilität in der Wahl des jeweiligen Modellierelementes, das ohne eine weitere Strahlungsquelle vorsehen zu müssen, für eine Vielzahl von Anwendungen jeweils gezielt ausgewählt werden kann.

In einer weiteren Ausführungsform der vorliegenden Erfindung ist das Modellierelement fest mit einem Gehäuse zur Aufnahme der Strahlungsquelle verbunden. Bei einer geeigneten Befestigung an einem Gehäuse ist eine erhöhte Handhabungssicherheit des Modellierelementes möglich.

In einer weiteren Ausführungsform der vorliegenden Erfindung ist das Strahlungselement zur Abblendung, Maskierung und/oder Fokussierung der Strahlung ausgestaltet und weist insbesondere eine Blende, Maske und/oder Linse auf, wobei die Blende, Maske und/oder Linse bevorzugt einstellbar ausgestaltet ist. Durch die Ausgestaltung des Strahlungselementes kann somit zusätzlich eine Führung und Steuerung bzw. Ausrichtung der Strahlung zur Härtung des Werkstoffs gewährleistet werden. Bei einer einstellbaren Ausgestaltung ergibt sich eine zusätzliche Flexibilität, die eine Anpassung des Strahlungselements an eine große Vielzahl von Einsatzmöglichkeiten erlaubt, ohne dass das Strahlungselement ausgetauscht werden müsste.

Gemäß einer weiteren Ausführungsform der vorliegenden Erfindung ist das Strahlungselement ausgestaltet, eine vorbestimmte Austrittsposition und/oder Austrittsrichtung der Strahlung relativ zu dem Modellierelement sicherzustellen. In entsprechenden Anwendungsfällen kann es wünschenswert sein, dass die Strahlung nur in einem bestimmten Bereich relativ zu dem modellierenden Modellierelement oder nur in einer bestimmten Richtung dazu auf das Material trifft.

In einer bevorzugten Ausführungsform der vorliegenden Erfindung ist die Austrittsposition der Strahlung in dem Modellierelement vorgesehen. Damit ergibt sich ein direktes Zusammentreffen der Modellierung an dem Werkstoff und der Position, an der der modellierte Werkstoff gehärtet wird. Somit kann vermieden werden, dass eine Härtung des Werkstoffs in Bereichen auftritt, die mit dem Modellierelement noch nicht (ausreichend) in gewünschter Weise bearbeitet wurden.

In einer weiteren vorteilhaften Ausführungsform der vorliegenden Erfindung ist die Austrittsposition der Strahlung abseits des Modellierelementes vorgesehen, wobei vorzugsweise die Austrittsrichtung der Strahlung im Wesentlichen entlang des Modellierelementes vorgesehen ist, sodass die Strahlung im Bereich des Modellierelementes auf einen Werkstoff auftreffen kann, wobei das Modellierelement insbesondere zumindest teilweise undurchlässig für die Strahlung ist. Diese Ausführungsform kann beispielsweise dann Einsatz finden, wenn eine Bestrahlung des Werkstoffs direkt vor oder direkt nach einem Überstreichen mit dem Modellierelement gewünscht ist.

In einer anderen bevorzugten Ausführungsform ist das Strahlungselement ausgestaltet, so dass die Strahlung um einen Kontaktbereich des Modellierelementes mit dem Werkstoff beim Modellieren herum auf den Werkstoff auftreffen kann. Das Strahlungselement ist hierbei so ausgeführt, dass ein gewünschter Bereich zusätzlich zu dem Bereich, in dem das Modellierelement beim Modellieren im Kontakt mit dem Werkstoff steht, ebenfalls vom Strahlungsfeld abgedeckt wird.

In einer weiteren Ausführungsform der vorliegenden Erfindung weist das Strahlungselement einen hohlen Strahlungsleiter auf. Der hohle Strahlungsleiter weist in seinem Inneren einen Hohlraum auf, wobei zwischen einer Innenwandung des Strahlungsleiters und einer Außenwandung des Strahlungselements jeweils eine Totalreflexion der geführten Strahlung auftritt. Der Hohlraum in Inneren des Strahlungsleiters kann zur Führung eines Fluids, also beispielsweise einer Flüssigkeit, eines Gases, von fließfähiger Feststoffen oder Mischungen daraus, vorgesehen sein.

In einer weiteren vorteilhaften Ausführungsform weist das Strahlungselement eine Vielzahl von parallel angeordneten Strahlungsleitern auf. Im inneren dieser Strahlungsleiter, die beispielsweise als Glasfasern oder andere Lichtwellenleiter ausgeführt sein können, wird die Strahlung geführt. Die parallelen Strahlungsleiter führen jeweils vorbestimmte Ausschnitte des Strahlungsquerschnittes, wobei mit unterschiedlichen Strahlungsleitern Strahlung zu unterschiedlichen Austrittspositionen geführt werden kann. Zudem besteht mit der Vielzahl von Strahlungsleitern eine Möglichkeit, die Strahlungsführung um ein Bauteil in der Modelliervorrichtung herum zu führen. Mit einer unterschiedlichen Dichte an Strahlungsleitern kann zudem eine unterschiedliche Intensität der Strahlung beim Austritt aus der Modelliervorrichtung erreicht werden. Bei gleicher Strahlungsaufnahme jeweils eines Strahlungsleiters kann durch eine Konzentration von Strahlungsleitern in einem Bereich eine höhere Strahlungsleistung abgegeben werden als in einem anderen Bereich, in dem weniger Strahlungsleiter zusammengefasst sind.

In einer Ausführungsform der Erfindung sind das Strahlungselement und/oder das Modellierelement verformbar ausgestaltet, wobei insbesondere das Strahlungselement eine Vielzahl von parallel angeordneten, verformbaren Strahlungsleitern aufweist und parallel zu den Strahlungsleitern Versteifungselemente vorgesehen sind. Mit einem flexiblen Modellierelement und/oder einem flexiblen Strahlungselement kann die Modelliervorrichtung in einfacher Weise an unterschiedliche Einsatzbedingungen angepasst werden. Hierbei erlauben flexible Strahlungsleiter eine ausreichende und gewünschte Strahlungsführung und eine vorbestimmte Strahlungsfeldformung, während biegesteife Versteifungselemente eine ausreichende Festigkeit des Modellier- bzw. Strahlungselementes sicherstellen.

Vorteilhafterweise sind in einer Ausführungsform der Erfindung das Strahlungselement und/oder das Modellierelement von einer bei einer Modellierung auftretenden Kraft nicht verformbar sind. Damit behalten das Strahlungselement bzw. das Modellierelement auch im Einsatz ihre vorbestimmte Form und Ausrichtung bei.

Gemäß einer weiteren erfindungsgemäßen Ausführungsform sind das Strahlungselement und/oder das Modellierelement von einer bei einer Modellierung auftretenden Kraft nur in bestimmter Weise verformbar, vorzugsweise elastisch verformbar. Ist das Verformungsergebnis einer Krafteinwirkung bei einer Modellierung vorbestimmt, so kann der Benutzer diese Verformung bei seiner Arbeit einkalkulieren und auch bei einem verformten Strahlungselement und/oder Modellierelement einen gewünschten Arbeitserfolg definiert erreichen.

In einer weiteren Ausführungsform weist ein Strahlungselement einen Strahlungsleiter mit flüssigem Material auf. Neben den herkömmlichen Strahlungsleitern wie beispielweise Glasfasern oder anderen Lichtwellenleiter kann auch eine Strahlungsführung bzw. -feldformung mit einem flüssigen Material vorgesehen sein.

In einer vorteilhaften Ausführungsform der vorliegenden Erfindung weist das Strahlungselement und/oder das Modellierelement eine Beschichtung zur Vermeidung von Strahlungsverlusten auf, insbesondere eine Bedampfung mit Aluminium und/oder Silber. Insbesondere in Fällen, bei denen eine Totalreflexion an einer Begrenzungsfläche des Strahlungselements und/oder Modellierelements lediglich infolge der unterschiedlichen Brechzahlen nicht oder in nicht ausreichendem Maße erreicht werden kann, kann eine Strahlungsführung auch durch eine reflektierende Schicht an dieser Begrenzungsfläche erreicht oder unterstützt werden.

In bevorzugten Ausführungsformen der Erfindung weist das Strahlungselement und/oder das Modellierelement ein Material auf oder besteht daraus, das ausgewählt ist aus der Gruppe bestehend aus Glas, insbesondere Quarzglas, Kunststoff, insbesondere Silikon, und Mischungen daraus. Aus Glas, Kunststoff oder Mischungen davon bestehendes oder diese Materialien umfassendes Strahlungselement bzw. Modellierelement kann in einfacher Weise mit bekannten Verfahren hergestellt werden.

In einer vorteilhaften Ausführungsform sind Modellierelement und Strahlungselement einstückig ausgebildet. Bei einer Ausführung mit einem Element, das die Funktionen von Modellierelement und Strahlungselement gemeinsam ausfüllt, lassen sich Schwierigkeiten bei einer ansonsten ggf. vorzusehenden mechanischen Kopplung von Strahlungselement und Modellierelement vermeiden. Hinzu kommt, dass auch eventuelle Strahlungsverluste durch eine einstückige Bauweise minimiert werden.

In einer bevorzugten Ausführung ist die Modelliervorrichtung zur Einhandbedienung ausgestaltet, wobei die Modelliervorrichtung insbesondere ein stiftförmiges Gehäuse zur Aufnahme von Modellierelement und Strahlungsquelle aufweist. Hierbei ist insbesondere eine Steuereinheit für die Strahlungsquelle von Vorteil, die bei Bedienung der Modelliervorrichtung mit einer Hand an einer für einen Finger der Hand erreichbaren Position angeordnet ist.

Gemäß einer weiteren vorteilhaften Ausführungsform der Erfindung ist die Strahlungsquelle zur Erzeugung einer ersten und einer zweiten Strahlung ausgestaltet, wobei die erste und die zweite Strahlung sich in wenigstens einer Eigenschaft unterscheiden, insbesondere in Frequenz, Frequenzbereich, Polarisation und/oder Intensität. Die Bereitstellung von wenigstens zwei unterschiedlichen Strahlungen durch die Strahlungsquelle erlaubt in bestimmten Situationen eine weitere Reduktion von Arbeitsschritten wie dem Austausch der Modelliervorrichtung gegen eine andere Härtelampe. Beispielsweise kann eine erste Strahlung zu einer Vorverfestigung bzw. Anhärtung des Werkstoffs dienen, während eine zweite Strahlung, vorzugsweise nach abgeschlossener Modellierung, zu einer abschließenden Durchhärtung des Werkstoffs dient.

Eine bevorzugte Ausführungsform zeichnet sich dadurch aus, dass das Strahlungselement und/oder das Modellierelement einen ersten Strahlungsweg für die erste Strahlung und einen zweiten Strahlungsweg für die zweite Strahlung aufweisen. Die unterschiedlichen Strahlungswege für unterschiedliche Strahlungen erlauben eine getrennte Führung der jeweiligen Strahlung und eine unterschiedliche Formung des jeweiligen Strahlungsfeldes.

Im folgenden wird die Erfindung anhand beispielhafter Ausführungsformen unter Bezug auf die beiliegenden Figuren näher erläutert. Hierbei zeigt:
- Fig. 1: eine Querschnittsansicht einer erfindungsgemäßen Modelliervorrichtung,
- Fig. 2: eine Explosionsdarstellung der in Fig. 1 gezeigten Modelliervorrichtung,
- Fig. 3a, 3b: jeweils ein Modellier- und Strahlungselement der in den Fig. 1 und 2 gezeigten Modelliervorrichtung mit einer Fixierungshülse in Seitenansicht bzw. im Querschnitt,
- Fig. 4a-4e: jeweils einen Querschnitt weiterer erfindungsgemäßer Modellier- und Strahlungselemente zur Verwendung in einer Modelliervorrichtung wie in Fig. 1 und 2 gezeigt,
- Fig. 5: eine teilweise Querschnittsansicht einer erfindungsgemäßen Kombination aus Modellierelement und Strahlungselement,
- Fig. 6a: eine Ansicht entlang einer Längsachse auf die Spitze eines erfindungsgemäßen Modellier- und Strahlungselementes mit vier Strahlungsaustritten,
- Fig. 6b: eine Maske für das in Fig. 6a dargestellte Modellier- und Strahlungselement, und
- Fig. 7a-7c: jeweils eine Teilansicht einer erfindungsgemäßen Modelliervorrichtung bei der Bearbeitung eines Zahnersatzes bzw. Zahnteilersatzes.

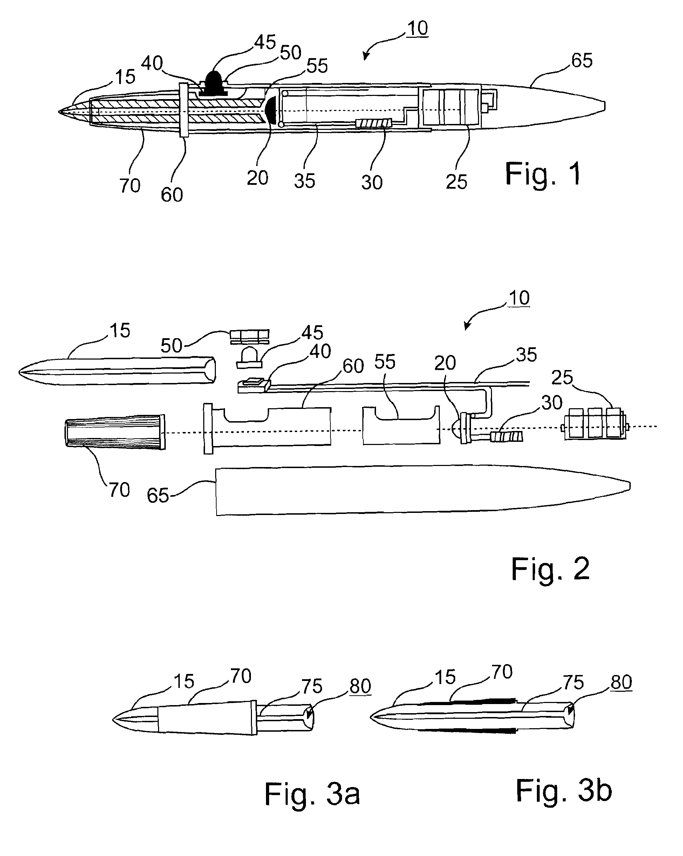

Die Figuren 1 und 2 zeigen eine erfindungsgemäße Modelliervorrichtung in einer Querschnittsansicht und einer Explosionsdarstellung. Die Modelliervorrichtung 10 umfasst ein Modellier- und Strahlungselement 15 und eine Strahlungsquelle 20. Die Strahlungsquelle 20 ist mit einer Energieversorgung 25 in Form einer Batterie (oder alternativ eines Akkumulators) über einen Widerstand 30 und eine geeignete Verkabelung 35 verbunden. Die Verkabelung 35 ist mit einem Druckschalter 40 ausgestattet, dem ein Schaltknopf 45 mit einer entsprechenden Abdeckung 50 zugeordnet ist. Die erfindungsgemäße Modelliervorrichtung 10 umfasst ferner eine Klemmhülse 55 zur Aufnahme des Modellier- und Strahlungselementes 15, sowie eine Tragehülse 60, an der die Strahlungsquelle 20, die Klemmhülse 55 und der Druckschalter 40 fixiert sind. Die Modelliervorrichtung 10 umfasst zudem eine Außenhülse 65 zur Aufnahme der oben angeführten Elemente. Das Modellier- und Strahlungselementes 15 wird zusätzlich durch eine Fixierungshülse 70 in seiner eingebrachten Position, wie sie in Fig. 1 dargestellt ist, fixiert. Bei der Strahlungsquelle 20 handelt es sich um eine LED mit geeignetem Spektrum für Photoinitiatoren, die mittels des Druckschalters 40 ein- und ausgeschaltet wird. Die Mehrheit der Photoinitiatoren, die in Dental-Werkstoffen enthalten sind, absorbieren bevorzugt in den Bereichen 315 bis 570 nm. Hervorzuheben sind aufgrund ihrer Verbreitung die Photoinitiatoren Lucirin (TPO) und Campherquinon (CQ) mit Absorptionsmaxima bei ca. 370 nm bzw. ca. 470 nm. Die Strahlungsquelle 20 überdeckt diesen Bereich mit einem Leistungsspektrum von 200 bis 580 nm. Die Modelliervorrichtung 10 ähnelt in ihrer Gestalt im zusammengebauten Zustand einem Kugelschreiber, wobei der Druckschalter 40 beziehungsweise der zur Bedienung des Druckschalters 40 vorgesehene Schaltknopf 45 an einer Stelle der Modelliervorrichtung 10 angeordnet ist, die für den Benutzer leicht zu erreichen ist, wenn der Benutzer die Modelliervorrichtung 10 in geeigneter Weise mit einer Hand hält, ähnlich zum Schreiben mit einem Stift.

Von der Strahlungsquelle 20 im eingeschalteten Zustand ausgestrahltes Licht wird durch das Modellier- und Strahlungselement 15 aufgenommen und an durch das Modellier- und Strahlungselement 15 hindurch zu seiner Spitze geleitet. An der Spitze tritt das Licht aus und trifft dann auf den Werkstoff (nicht dargestellt), wo es eine Lichthärtung durch Anstoßen einer Polymerisation bewirkt.

In den Figuren 3a und 3b ist das Modellier- und Strahlungselement 15, das in den Figuren 1 und 2 gezeigt ist, mit einer Fixierungshülse 70 in einer Seitenbeziehungsweise in einer Querschnittsansicht dargestellt. Das Modellier- und Strahlungselement 15 umfasst einen hohlen Strahlungsleiter 75, wobei das Modellier- und Strahlungselement zudem eine Ausnehmung 80 aufweist, die ausgestaltet ist, um im eingebauten Zustand die Strahlungsquelle 20 zumindest teilweise aufzunehmen, wie dies in Fig. 1 angedeutet ist. Mit dieser Aufnahme 80 umschließt das Modellier- und Strahlungselement 15 im eingebauten Zustand die Strahlungsquelle 20, also die LED bzw. deren Linse, teilweise, so dass eine gute optische Kopplung zwischen der Strahlungsquelle 20 und dem Modellier- und Strahlungselement gegeben ist.

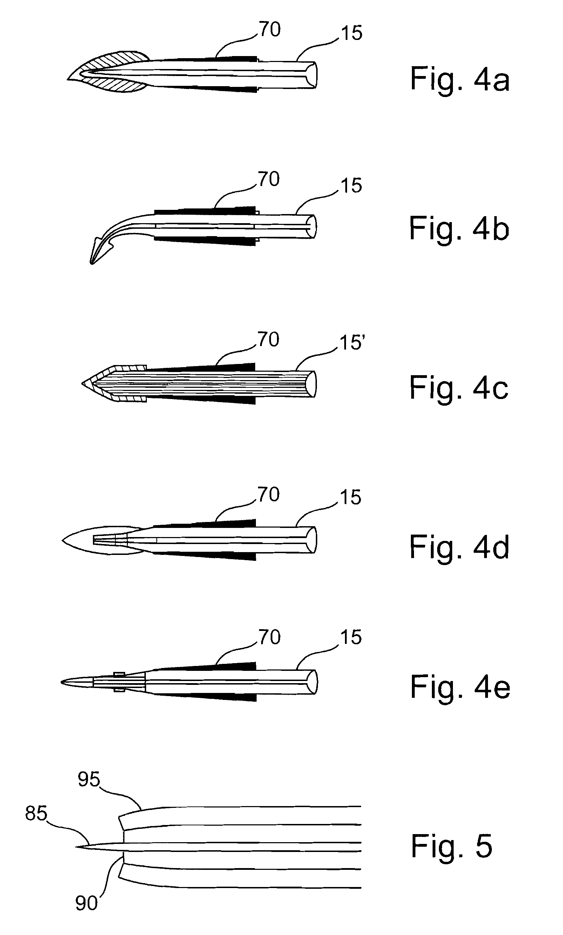

Die Figuren 4a bis 4e zeigen jeweils eine Querschnittsansicht weiterer erfindungsgemäßer Modellier- und Strahlungselemente 15, 15', die für eine Verwendung in einer Modelliervorrichtung 10 geeignet sind, wie sie in Fig. 1 und 2 dargestellt ist. Jeweils ist zudem die Fixierhülse 70 mit dargestellt. Die in den Figuren 4a, 4b, 4d und 4e dargestellten Modellier- und Strahlungselemente umfassen jeweils einen hohlen Strahlungsleiter, wobei die jeweiligen Spitzen der Modellier-und Strahlungselemente 15 unterschiedlich ausgestaltet sind. Das in Fig. 4a gezeigte Modellier- und Strahlungselement 15 weist eine Silikonspitze auf, während das in Fig. 4b gezeigte Modellier- und Strahlungselement 15 eine Kegelspitze aufweist, die gegenüber einer Längsachse des Modellier- und Strahlungselementes 15 geneigt ist. Die Figuren 4d und 4e zeigen ein Modellier- und Strahlungselement 15 mit einer aufgesetzten Plexiglasspitze in einer Querschnittsansicht jeweils aus zwei unterschiedlichen Richtungen. Das in Fig. 4c dargestellte Modellier- und Strahlungselement 15 umfasst eine Mehrzahl von Glasfasern als Strahlungsleitern, die parallel angeordnet sind. Das Modellier- und Strahlungselement 15' aus Fig. 4c besitzt ähnlich wie das in Fig. 4a dargestellte Modellier-und Strahlungselement 15 eine Silikonspitze. Die unterschiedlichen Spitzenformen, die bei der erfindungsgemäßen Modelliervorrichtung eingesetzt werden können, entsprechen den Modellierspitzen herkömmlicher Modelliervorrichtungen, die dem Fachmann ausreichend bekannt sind, sodass hier auf eine nähere Erläuterung ihrer Ausformung und Anwendung verzichtet werden kann.

Fig. 5 zeigt eine teilweise Querschnittsansicht einer erfindungsgemäßen Kombination aus einem Modeliierelement und einem Strahlungselement. Das Modellierelement 85 ist in Fig. 5 schematisch als einfache Spitze dargestellt. Die Spitze beziehungsweise das Modellierelement 85 wird teilweise von einem ersten Strahlungsleiter 90 umschlossen, der seinerseits von einem zweiten Strahlungsleiter 95 umschlossen wird. Die Strahlungsleiter 90, 95 sind hierbei so ausgestaltet, dass eine an ihrem der Spitze des Modellierelements 85 zugewandten Ende austretende Strahlung im wesentlichen auf die Spitze 85 des Modellierelements gerichtet ist. Die beiden Strahlungsleiter 90, 95 sind hierbei jeweils mit einer ihnen zugeordneten eigenen Strahlungsquelle (nicht dargestellt) in optischer Weise verbunden, sodass der erste Strahlungsleiter 90 die Strahlung einer ersten Strahlungsquelle (nicht dargestellt) führt, während der zweite Strahlungsleiter 95 die Strahlung einer zweiten Strahlungsquelle (nicht dargestellt) führt, wobei die erste und zweite Strahlungsquelle zur Erzeugung unterschiedlicher Strahlungen ausgebildet sind.

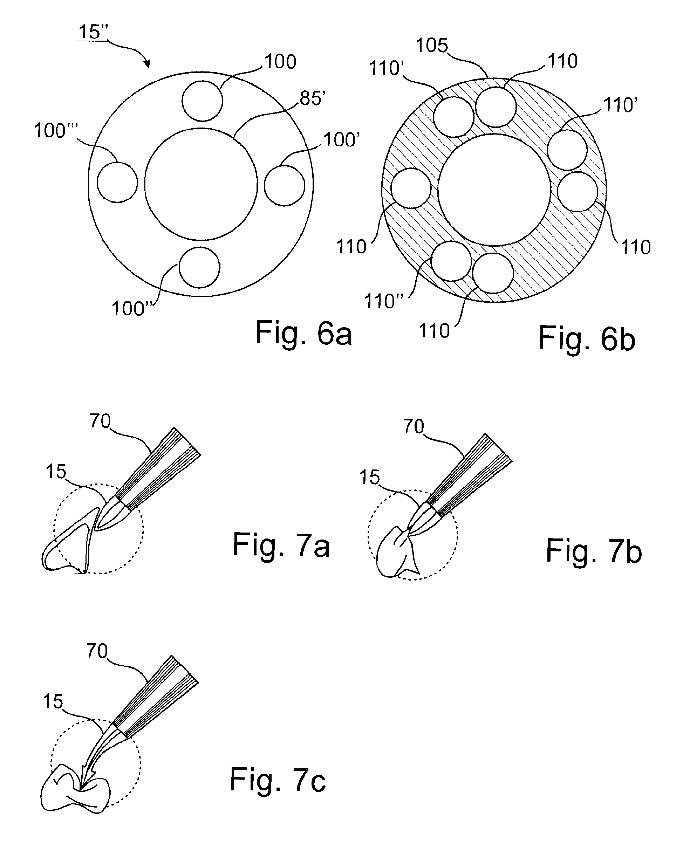

In Fig. 6a ist eine Ansicht entlang einer Längsachse auf die Spitze eines erfindungsgemäßen Modellier- und Strahlungselementes 15" dargestellt, das eine Modellierspitze 85' und 4 Strahlungsaustritte 100, 100', 100" und 100"' aufweist. Die Strahlungsaustritte 100, 100', 100", 100"' sind regelmäßig um die Modellierspitze 85' herum angeordnet, wobei die Strahlungsaustrittsrichtung der jeweiligen Strahlungsaustritte in gewünschter Weise eingestellt ist. Die Strahlungsaustritte 100, 100', 100" und 100"' sind unterschiedlichen Strahlungsleitern (nicht dargestellt) zugeordnet, die optisch mit einer Strahlungsquelle (nicht dargestellt) gekoppelt sind. Fig. 6b zeigt eine Maske für das in Fig. 6a dargestellte Modellier- und Strahlungselement 15". Die Maske 105 umfasst eine Anzahl von Öffnungen, die auf die Strahlungsaustritte 100, 100', 100" und 100"' des Modellier- und Strahlungselementes 15" aus Fig. 6a angepasst sind. Die Öffnungen lassen sich hierbei in drei Gruppen einteilen. Eine erste Gruppe umfasst vier Öffnungen 110, die in der gleichen Weise angeordnet sind, wie die vier Strahlungsaustritte 100, 100', 100" und 100"', d. h. die Öffnungen 110 sind jeweils um 90° versetzt regelmäßig über den Umfang der Maske 105 verteilt. Eine zweite Gruppe von Öffnungen umfasst zwei Öffnungen 110, die jeweils um einen Winkel von 30° gegenüber einer der Öffnungen 110 versetzt sind. Eine dritte Gruppe von Öffnungen umfasst die Öffnung 110", die um 30° entgegen der Versatzrichtung der zweiten Gruppe 110' gegenüber einer Öffnung 110 versetzt ist. In der in Fig. 6b dargestellten Ausrichtung wäre die Maske 105 mit den Strahlungsaustritten 100, 100', 100" und 100"' in Deckung gebracht, sodass durch die Öffnungen 110 Strahlung aus allen vier Strahlungsaustritten durchgelassen würde. Bei einer Verdrehung der in Fig. 6b dargestellten Maske um 30° im Uhrzeigersinn befänden sich die Öffnungen 110' mit den Austritten 100 und 100' des in Fig. 6a dargestellten Modellier- und Strahlungselementes 15" in Deckung, sodass die Strahlungsaustritte 100" und 100"' durch die Maske 105 maskiert würden. Würde die in Fig. 6b dargestellte Maske 105 um 60° im Uhrzeigersinn verdreht, so befände sich nur die Öffnung 110" mit der Austrittsöffnung 100"' in Deckung, sodass bei einer derartigen Kombination von Maske 105 und Modellier- und Strahlungselement 15" nur Strahlung aus dem Strahlungsaustritt 100"' durchgelassen würde. Mit der in Fig. 6b dargestellten Maske 105 kann somit in gezielter Weise eine Auswahl von Strahlungsaustritten des Modellier- und Strahlungselementes 15" maskiert werden. Mit einer derartigen Maskierung lässt sich auf einfache Weise eine Steuerung der von den Strahlungsaustritten 100, 100', 100" und 100"' durchgelassenen Strahlungsdichte herstellen. Es versteht sich von selbst, dass auch andere Maskenausgestaltungen erfindungsgemäß vorgesehen sein können. Insbesondere können andere Verteilungen von Öffnungen in erfindungsgemäßen Masken vorgesehen sein. Zudem können erfindungsgemäß auch unterschiedliche Strahlungsquellen mit den jeweiligen Austritten des Modellier- und Strahlungselementes 15" verbunden sein. Das Modellier- und Strahlungselement 15" kann zudem auch ohne eine Maske eingesetzt werden.

In den Figuren 7a bis 7c werden jeweils eine Teilansicht einer erfindungsgemäßen Modelliervorrichtung bei der Bearbeitung eines Zahnersatzes beziehungsweise eines Zahnteilersatzes gezeigt. Dargestellt sind hierbei jeweils nur das Modellier- und Strahlungselement 15 und die das Modellier- und Strahlungselement 15 an der Modelliervorrichtung fixierende Fixierungshülse 70. Die grundsätzlichen Bearbeitungsmöglichkeiten durch eine Modelliervorrichtung sind dem Fachmann bekannt, sodass sich eine nähere Erläuterung der Darstellungen in den Figuren 7a bis 7c erübrigt.

Die erfindungsgemäße Modelliervorrichtung vereinigt zwei unterschiedliche Werkzeuge in einem einzigen Werkzeug. Die erfindungsgemäße Modelliervorrichtung erlaubt gleichzeitig ein Modellieren mit Hilfe eines Modellierelementes, während über ein Strahlungselement Licht in einer geeigneten Wellenlänge in beziehungsweise auf einen lichthärtenden Werkstoff eingeleitet werden kann, um z.B. eine Polymerisation zu starten. Die Dauer der Lichteinwirkung kann beispielsweise durch den Benutzer per Knopfdruck individuell bestimmt werden. Alternativ oder ergänzend können auch frei programmierbare oder bereits vorgegebene Polymerisationsprogramme vorgesehen sein.

Ein erfindungsgemäßes Modellier- und Strahlungselement kann auch als lichtbündelnder oder lichtführender Gestaltungs- und Aushärtungskörper bezeichnet werden.

Das Modellierelement und das Strahlungselement der erfindungsgemäßen Modelliervorrichtung sind vorzugsweise bei Bedarf gegen andere Elemente austauschbar, die sich entsprechend der jeweiligen Anforderung an die erfindungsgemäße Modelliervorrichtung in ihren Ausformungen unterscheiden, sodass sie den Modellierwünschen und Ansprüchen des Anwenders entgegenkommen. Alternativ können erfindungsgemäß das Modellierelement und/oder das Strahlungselement beziehungsweise die Modellierelemente und/oder die Strahlungselemente auch mit der restlichen Modelliervorrichtung fest verbunden sein, wobei dann unter Umständen mehrere komplette Einheiten beim Modellieren zum Einsatz kommen können.

Die Strahlungselemente gemäß der Erfindung bestehen bevorzugt aus geeigneten lichtleitenden hohlen Gläsern oder einem Vollmaterial, wobei insbesondere Quarzgläser, Silikone und Kunststoffe sowie Kombination hieraus bevorzugt werden. Erfindungsgemäß können auch elastische lichtleitende Fasern mit oder in weniger lichtleitfähigen Materialien kombiniert werden. Ferner besteht erfindungsgemäß auch die Möglichkeit, flüssige und feste Materialien in einem erfindungsgemäßen Lichtleitsystem beziehungsweise Strahlungselement zu kombinieren. Das Strahlungselement kann wie auch das Modellierelement glashart oder weich und biegsam sein. Das erfindungsgemäße Modellierelement kann, sofern gewünscht, aus einem lichtundurchlässigen Material hergestellt sein, wobei die Strahlung dann in geeigneter Weise um das Modellierelement herumgeleitet oder -gestrahlt wird. Strahlungsquelle, Modellierelement und Strahlungselement können auch einstückig ausgeformt sein, beispielsweise kann eine Linse der Lichtquelle selbst als Modellierspitze genutzt werden.

In einem vorteilhaften Ausführungsbeispiel ist ein Glasstab mit einer runden Außenform als Modellier- und Strahlungselement vorgesehen, wobei der Glasstab innen hohl ausgestaltet ist und zur Spitze hin konisch zuläuft. Die Spitze des Glasstabs ist geschlossen. Bei diesem Ausführungsbeispiel sendet eine am anderen Ende des Glasstabs optisch angekoppelte Lichtquelle Licht mit geeigneter Wellenlänge in den Glaskörper, wo es an der inneren Rohrwandung reflektiert und in die Spitze des Glasstabes geleitet wird, von wo es in ein zu härtendes Material geleitet werden kann. Die hierbei auftretende Totalreflektion gewährleistet einen ausreichenden Lichttransport, sodass Strahlungsverluste weitestgehend vermieden werden. Eine weitere Vermeidung auftretender Strahlungsverluste wird im vorliegenden Beispiel durch eine Bedampfung der Außenfläche oder eine Abdeckung mit Aluminium oder Silber erreicht.

Durch ein individuelles Zuschalten kann bei diesem Beispiel mit der geeigneten geregelten Lichtquelle das zu härtende Material in einer gewünschten Zeit gehärtet werden.

Erfindungsgemäß wird eine Leuchtdiode mit einem Spektrum von 200 bis 580 nm bevorzugt" die Licht mit einem geeignetem Spektrum aussendet , es kann jedoch u.a. auch eine Halogenlampe, eine Kaltlichtkathode oder eine Laserlichtquelle verwendet werden. Zudem ist die Erfindung nicht auf ultraviolettes Licht beschränkt, andere Wellenlängen beziehungsweise Wellenlängenbereiche können ebenfalls erfindungsgemäß eingesetzt werden. Eine Mobilität der erfindungsgemäßen Modelliervorrichtung kann insbesondere mit einem Betrieb über Batterien oder Akkumulatoren erreicht werden, obgleich erfindungsgemäß auch eine externe Stromquelle zur Energieversorgung der Strahlungsquelle vorgesehen sein kann.

## Patentansprüche

1. Modelliervorrichtung (10) für einen strahlungshärtenden Werkstoff, insbesondere für einen lichthärtenden Dentalwerkstoff, **gekennzeichnet durch**:
- ein Modellierelement (15, 15', 15", 85, 85'), insbesondere einer Modellierspitze, zur Modellierung des Werkstoffs vor und/oder während einer Anhärtung und/oder Härtung und
- eine Strahlungsquelle (20) zur Bereitstellung von Strahlung für die Anhärtung und/oder Härtung des Werkstoffs,
wobei
das Modellierelement (15, 15', 15", 85, 85') mit der Strahlungsquelle (20) gekoppelt ist und
die Modelliervorrichtung (10) mit wenigstens einem Strahlungselement (15, 15', 15", 90, 95) zur Strahlungsführung und/oder Strahlungsfeldformung versehen ist.

2. Modelliervorrichtung (10) nach Anspruch 1,
**dadurch gekennzeichnet, dass** das Modellierelement (15, 15', 15", 85, 85') lösbar mit der Strahlungsquelle (20) verbunden ist.

3. Modelliervorrichtung (10) nach einem der vorstehenden Ansprüche,
**dadurch gekennzeichnet, dass** das Modellierelement (15, 15', 15", 85, 85') fest mit einem Gehäuse (60, 65) zur Aufnahme der Strahlungsquelle (20) verbunden ist.

4. Modelliervorrichtung (10) nach einem der vorstehenden Ansprüche,
**dadurch gekennzeichnet, dass** das Strahlungselement (15, 15', 15", 90, 95) zur Abblendung, Maskierung und/oder Fokussierung der Strahlung ausgestaltet ist und insbesondere eine Blende (105), Maske (105) und/oder Linse aufweist,
wobei die Blende (105), Maske (105) und/oder Linse bevorzugt einstellbar ausgestaltet ist.

5. Modelliervorrichtung (10) nach einem der vorstehenden Ansprüche,
**dadurch gekennzeichnet, dass** das Strahlungselement (15, 15', 15", 90, 95) ausgestaltet ist, eine vorbestimmte Austrittsposition und/oder Austrittsrichtung der Strahlung relativ zu dem Modellierelement (15, 15', 15", 85, 85') sicherzustellen.

6. Modelliervorrichtung (10) nach Anspruch 5,
**dadurch gekennzeichnet, dass** die Austrittsposition der Strahlung in dem Modellierelement (15, 15') vorgesehen ist.

7. Modelliervorrichtung (10) nach Anspruch 5,
**dadurch gekennzeichnet, dass** die Austrittsposition der Strahlung abseits des Modellierelementes (15, 15', 15", 85, 85') vorgesehen ist, wobei vorzugsweise die Austrittsrichtung der Strahlung im wesentlichen entlang des Modellierelementes (15, 15', 15", 85, 85') vorgesehen ist, so dass die Strahlung im Bereich des Modellierelementes (15, 15', 15", 85, 85') auf einen Werkstoff auftreffen kann,
wobei das Modellierelement (15, 15', 15", 85, 85') insbesondere zumindest teilweise undurchlässig für die Strahlung ist.

8. Modelliervorrichtung (10) nach Anspruch 7,
**dadurch gekennzeichnet, dass** das Strahlungselement (15, 15', 15", 90, 95) ausgestaltet ist, so dass die Strahlung um einen Kontaktbereich des Modellierelementes (15, 15', 15", 85, 85') mit dem Werkstoff beim Modellieren herum auf den Werkstoff auftreffen kann.

9. Modelliervorrichtung (10) nach einem der vorstehenden Ansprüche,
**dadurch gekennzeichnet, dass** das Strahlungselement (15, 15', 15", 90, 95) einen hohlen Strahlungsleiter aufweist.

10. Modelliervorrichtung (10) nach einem der vorstehenden Ansprüche,
**dadurch gekennzeichnet, dass** das Strahlungselement (15, 15', 15", 90, 95) eine Vielzahl von parallel angeordneten Strahlungsleitern aufweist.

11. Modelliervorrichtung (10) nach einem der vorstehenden Ansprüche,
**dadurch gekennzeichnet, dass** das Strahlungselement (15, 15', 15", 90, 95) und/oder das Modellierelement (15, 15', 15", 85, 85') verformbar ausgestaltet sind, wobei insbesondere das Strahlungselement (15, 15', 15", 90, 95) eine Vielzahl von parallel angeordneten, verformbaren Strahlungsleitern aufweist und parallel zu den Strahlungsleitern Versteifungselemente vorgesehen sind.

12. Modelliervorrichtung (10) nach einem der vorstehenden Ansprüche,
**dadurch gekennzeichnet, dass** das Strahlungselement (15, 15', 15", 90, 95) und/oder das Modellierelement (15, 15', 15", 85, 85') von einer bei einer Modellierung auftretenden Kraft nicht verformbar sind.

13. Modelliervorrichtung (10) nach einem der vorstehenden Ansprüche,
**dadurch gekennzeichnet, dass** das Strahlungselement (15, 15', 15", 90, 95) und/oder das Modellierelement (15, 15', 15", 85, 85') von einer bei einer Modellierung auftretenden Kraft nur in bestimmter Weise verformbar sind, vorzugsweise elastisch verformbar.

14. Modelliervorrichtung (10) nach einem der vorstehenden Ansprüche,
**gekennzeichnet durch** ein Strahlungselement (15, 15', 15", 90, 95) mit einen Strahlungsleiter mit flüssigem Material.

15. Modelliervorrichtung (10) nach einem der vorstehenden Ansprüche,
**dadurch gekennzeichnet, dass** das Strahlungselement (15, 15', 15", 90, 95) und/oder das Modellierelement (15, 15', 15", 85, 85') eine Beschichtung zur Vermeidung von Strahlungsverlusten aufweist, insbesondere eine Bedampfung mit Aluminium und/oder Silber.

16. Modelliervorrichtung (10) nach einem der vorstehenden Ansprüche,
**dadurch gekennzeichnet, dass** das Strahlungselement (15, 15', 15", 90, 95) ein Material aufweist oder daraus besteht, das ausgewählt ist aus der Gruppe bestehend aus Glas, insbesondere Quarzglas, Kunststoff, insbesondere Silikon, und Mischungen daraus.

17. Modelliervorrichtung (10) nach einem der vorstehenden Ansprüche,
**dadurch gekennzeichnet, dass** das Modellierelement (15, 15', 15", 85, 85') ein Material aufweist oder daraus besteht, das ausgewählt ist aus der Gruppe bestehend aus Glas, insbesondere Quarzglas, Kunststoff, insbesondere Silikon, und Mischungen daraus.

18. Modelliervorrichtung (10) nach einem der vorstehenden Ansprüche,
**dadurch gekennzeichnet, dass** Modellierelement (15, 15') und Strahlungselement (15, 15') einstückig ausgebildet sind.

19. Modelliervorrichtung (10) nach einem der vorstehenden Ansprüche,
**gekennzeichnet durch** eine Ausgestaltung zur Einhandbedienung, wobei die Modelliervorrichtung (10) insbesondere ein stiftförmiges Gehäuse zur Aufnahme von Modellierelement (15, 15', 15", 85, 85') und Strahlungsquelle (20) aufweist.

20. Modelliervorrichtung (10) nach Anspruch 19,
**gekennzeichnet durch** eine Steuereinheit für die Strahlungsquelle (20), wobei die Steuereinheit bei Bedienung der Modelliervorrichtung (10) mit einer Hand an einer für einen Finger der Hand erreichbaren Position angeordnet ist.

21. Modelliervorrichtung (10) nach einem der vorstehenden Ansprüche,
**dadurch gekennzeichnet, dass** die Strahlungsquelle (20) zur Erzeugung einer ersten und einer zweiten Strahlung ausgestaltet ist, wobei die erste und die zweite Strahlung sich in wenigstens einer Eigenschaft unterscheiden, insbesondere in Frequenz, Frequenzbereich, Polarisation und/oder Intensität.

22. Modelliervorrichtung (10) nach Anspruch 21,
**dadurch gekennzeichnet, dass** das Strahlungselement (15, 15', 15", 90, 95) und/oder das Modellierelement (15, 15', 15", 85, 85') einen ersten Strahlungsweg für die erste Strahlung und einen zweiten Strahlungsweg für die zweite Strahlung aufweisen.
